# EUROPEAN PATENT APPLICATION

(11) **EP 3 646 959 A1**
(43) Date of publication of application: **06.05.2020**
(21) Application number: 18870748.3
(22) Date of filing: 06.07.2018
(51) Int. Cl.: B21C 1/16, C22C 38/02, C22C 38/04, C22C 38/18, B29D 30/48, B05D 5/00, C10M 105/74

(54) **HIGH-STRENGTH BEAD WIRE AND MANUFACTURING METHOD THEREFOR**

(30) Priority: 26.10.2017 KR 20170140320
(71) Applicant: Hongduk Industrial Co., Ltd., Gyeongsangbuk-do 37871 (KR)
(72) Inventor: PARK, Ok Shil, Pohang-si Gyeongsangbuk-do 37925 (KR); PARK, Dong Jin, Busan 47513 (KR)
(74) Representative: Steiniger, Carmen
(86) International application number: PCT/KR2018/007673
(87) International publication number: WO 2019/083121

(57) **Abstract**

Provided are a high-strength bead wire and a method of manufacturing the same. The method includes preparing a wire rod containing 0.86 % to 1.02 % by weight of carbon, applying 5 g/m² to 10 g/m² of phosphate coating onto the surface of the wire rod, and drawing the wire rod onto which the phosphate coating is applied. In the drawing, the wire rod is drawn by a drawing apparatus including a drawing die capable of drawing the wire rod and a pressure die installed in front of the drawing die and capable of applying pressure to the wire rod. The diameter of the pressure die is 1.05 times to 1.20 times the diameter of the drawing die. The high-strength bead wire includes a wire rod containing 0.86 % to 1.02 % by weight of carbon and 5 g/m² to 10 g/m² of the phosphate coating applied onto the surface of the wire rod and is manufactured by the above-described method.

## Description

### TECHNICAL FIELD

One or more embodiments of the present disclosure relate to a high-strength bead wire and a method of manufacturing the same, and more particularly, to a high-strength bead wire which may be provided with increased tensile strength by adjusting the amount of coating and the diameter of a pressure die to manufacture the high-strength bead wire with a high-carbon-content, and a method of manufacturing the same.

### BACKGROUND ART

In general, a bead is a portion where a tire and a wheel disc contact each other in an automobile tire, and a bead wire is embedded in the bead portion of the tire to withstand body load and ensure stability while driving. The bead wire is a highly significant component that fixes the tire to the wheel disc due to internal air pressure and deformation of the tire, and delivers driving force, brake force, and steering force of the automobile tire to a road surface.

A tire for a vehicle is composed of a tread portion that contacts the ground while driving, a bead portion in close contact with a rim portion of an automobile wheel, a shoulder portion connecting the bead portion and the tread portion, and a side wall portion. Several strands of a bead wire are embedded in the bead portion of the tire to support the vehicle.

The surface of the bead wire embedded in the bead portion is plated mainly with bronze made of an alloy of copper and tin to enhance the strength of adhesion to rubber, and various methods such as chemical plating, electroplating, and the like may be used in the plating. In addition, after the plating, a resin coating may be further applied onto the surface of the bead wire to enhance resistance to corrosion.

Such bead wires are gradually being strengthened to increase the fuel efficiency and stability of automobiles. A high-strength bead wire has the advantage of being capable of producing the same strength with a small amount as with a large amount when applied to real automobiles, thanks to its high strength-to-weight ratio.

However, there are some weak points identified in the process of manufacturing such a high-strength bead wire, as follows. A high-carbon-content material needs to be processed to manufacture the high-strength bead wire. However, as the carbon content increases, non-uniform processing tends to occur in the center and inside of the material during a drawing process, and accordingly, disconnection may occur during processing.

In addition, when a finished product is made of a material having a high-carbon-content, characteristic values such as torsional rotation, bending, and kink may be lowered in the finished product due to the high-carbon-content. Thus, in order to manufacture a high-strength bead wire, a bead wire manufacturing process capable of preventing a lowering of the characteristic values such as torsional rotation, bending, and kink and also occurrence of disconnection during the drawing process while increasing the carbon content is required.

### DESCRIPTION OF EMBODIMENTS

### TECHNICAL PROBLEM

One or more embodiments of the present disclosure relate to a high-strength bead wire capable of increasing tensile strength of a bead wire by adjusting the amount of coating and the diameter of a pressure die, thus manufacturing the high-strength bead wire containing a high-carbon-content, and a method of manufacturing the same.

### SOLUTION TO PROBLEM

The above-described method of manufacturing the high-strength bead wire includes: preparing a wire rod containing 0.86 % to 1.02 % by weight of carbon; applying 5 g/m² to 10 g/m² of phosphate coating onto the surface of the wire rod; and drawing the wire rod onto which the phosphate coating is applied; wherein the wire rod in the drawing is drawn by a drawing apparatus including a drawing die capable of drawing the wire rod and a pressure die installed in front of the drawing die and capable of applying pressure to the wire rod, and the diameter of the pressure die is 1.05 times to 1.2 times the diameter of the drawing die.

The wire rod of the above-described method of manufacturing the high-strength bead wire includes silicon, manganese, and chromium. It is desirable that the silicon be 0.40 % to 0.58 % by weight, the manganese be 0.25 % to 0.40 % by weight, and the chromium be 0.15 % to 0.25 % by weight. In addition, it is also desirable that the wire rod that has undergone the drawing is formed with a wire diameter of 0.8 mm to 3.0 mm, and has a strength of 240 kgf/mm² or greater and an elongation of 6 % or greater.

It is desirable that when the diameter of the wire rod after the drawing of the above-described method is greater than 1.3 mm, the drawing includes a primary drawing, and in contrast, when the diameter of the wire rod after the drawing is less than 1.3 mm, the drawing includes the primary drawing, a patenting process, and a secondary drawing.

The above-described high-strength bead wire includes a wire rod containing 0.86 % to 1.02 % by weight of carbon and 5 g/m² to 10 g/m² of phosphate coating to be applied onto the surface of the wire rod, wherein the wire rod is drawn by an apparatus including a drawing die capable of drawing the wire rod and a pressure die installed in front of the drawing die and capable of applying pressure to the wire rod, and the diameter of the pressure die is 1.05 times to 1.20 times the diameter of the drawing die.

The wire rod of the above-described high-strength bead wire includes silicon, manganese, and chromium. It is desirable that the silicon be 0.40 % to 0.58 % by weight, the manganese be 0.25 % to 0.40 % by weight, and the chromium be 0.15 % to 0.25 % by weight. In addition, it is also desirable that the wire rod drawn by the drawing apparatus is formed with a wire diameter of 0.8 mm to 3.0 mm, and has a strength of 240 kgf/mm² or greater and an elongation of 6 % or greater.

### ADVANTAGEOUS EFFECTS OF DISCLOSURE

According to the present disclosure, a high-strength bead wire containing a high-carbon-content may be manufactured by increasing lubrication performance through the adjustment of the amount of coating and the diameter of a pressure die.

In addition, the high-strength bead wire having a high strength-to-weight ratio, when applied to automobile tires, may reduce the weight of and increase fuel efficiency of automobiles, and also the high-strength bead wire having high tensile strength may increase endurance against tire pressure and resistance to external shocks, thus increasing stability of the automobile tires.

### BRIEF DESCRIPTION OF DRAWINGS

FIG. 1 is a flowchart illustrating a process of a method of manufacturing a high-strength bead wire, according to an embodiment of the present disclosure.
FIG. 2 is a diagram illustrating flow of a lubricant when a pressure die diameter is 1.05 times to 1.2 times a drawing die diameter, according to an embodiment of the present disclosure.
FIG. 3 is a diagram illustrating flow of a lubricant when the pressure die diameter is 1.2 times to 1.4 times the drawing die diameter, according to an embodiment of the present disclosure.
FIG. 4 is a graph comparing wire surface temperatures between an embodiment of the present disclosure and a comparative example.
FIG. 5 is a graph comparing surface roughness and a coating amount of residual lubricant between an embodiment of the present disclosure and a comparative example.
FIG. 6 is a table showing physical properties of a high-strength bead wire manufactured by a method of manufacturing a high-strength bead wire, according to an embodiment of the present disclosure.

### MODE OF DISCLOSURE

One or more embodiments of the present disclosure relate to a high-strength bead wire capable of increasing tensile strength of a bead wire by adjusting the amount of coating and the diameter of a pressure die, thus manufacturing the high-strength bead wire containing a high-carbon-content, and a method of manufacturing the same. Example embodiments of the present disclosure will be more fully understood from the following detailed description taken in conjunction with the accompanying drawings.

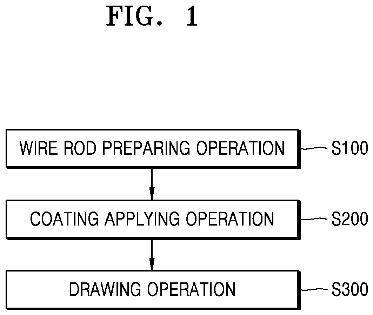

Referring to FIG. 1, the method of manufacturing a high-strength bead wire includes a wire rod preparation S100, a coating application S200, and a drawing S300.

In the wire rod preparation S100, a wire rod 110 containing 0.86 % to 1.02 % by weight of carbon (C) is prepared. Existing wire rods have a C content of 0.6 % to 0.85 % by weight. However, increasing the C content of the wire rods causes disconnection during a drawing process and lowers characteristic values such as torsional rotation, bending, and kink.

However, according to an embodiment of the present disclosure, it is possible to use a wire rod containing a C content of 0.86 % to 1.02 % by weight by adjusting the amount of coating and the diameter of a pressure die. In the wire rod preparation S100, a wire rod 110 containing a C content of 0.86 % to 1.02 % by weight is prepared.

The diameter of the wire rod 110 may range from 5.0 mm to 9.0 mm, wherein the wire rod 110 may include silicon, manganese, and chromium. (In detail, within the wire rod 110, the silicon may be 0.40 % to 0.58 % by weight, the manganese may be 0.25 % to 0.40 % by weight, and the chromium may be 0.15 % to 0.25 % by weight.)

In the coating application S200, 5 g/m² to 10 g/m² of phosphate coating 120 is applied onto the surface of the wire rod 110. The phosphate coating 120 serves as a lubricant when the wire rod 110 is drawn. In other words, the phosphate coating 120 applied onto the surface of the wire rod 110 is pressed by a pressure die 132 to be described herein below, and the phosphate coating 120 is liquefied by such pressure, and thus serves as a lubricant.

In general, when a high C steel wire rod containing a high C content is drawn, whereas the outside of the wire rod is less processed due to friction with a die (a drawing die 131, the pressure die 132, and so forth), the inside of the wire rod is more processed in comparison. Due to the difference in processing between the inside and outside of the wire rod, when the high C steel wire rod containing the high C content is drawn, internal cracks or blowholes may occur, which causes non-uniform processing. Due to such non-uniform processing, the high C steel wire rod containing a high C content may cause the characteristic values such as torsional rotation, bending, and kink to be lowered. Thus, in order to draw the high C steel wire rod containing a high C content without lowering the characteristic values, lubrication performance needs to be improved.

When the C content in the wire rod is relatively low (low C steel and medium C steel), the drawing process proceeds as expected even when the amount of the phosphate coating to be applied onto the wire rod surface is small, since friction between the die (the drawing die 131, the pressure die 132, and so forth) and the wire rod is not significant. (When the wire rod is made of low C steel or medium C steel, the drawing process proceeds as expected with 3 g/m² to 4 g/m² of the phosphate coating to be applied onto the wire rod surface.)

However, as an embodiment of the present disclosure has shown, in the case of the wire rod 110 containing a high C content, since its lubrication performance needs to be improved to reduce friction between the wire rod and the die during the drawing process, it is desirable that the amount of the phosphate coating 120 to be applied onto the surface of the wire rod 110 be 5 g/m² to 10 g/m² in the coating application S200, and 5 g/m² to 8 g/m² is most desirable. (Here, if the phosphate coating 120 is too thick, the phosphate coating 120 may be bundled in several places or the phosphate coating 120 may come off when the wire is bent, which may rather have a negative effect on the lubrication. Thus, it is desirable that the amount of the phosphate coating 120 be 10g/m² or less, and 5 g/m² to 8 g/m² is most desirable.)

In order to improve lubrication performance of the wire rod 110 containing a high C content, the lubrication performance needs to be improved by increasing the amount of the phosphate coating 120 to be applied onto the wire rod 110 and at the same time, increasing the pressure applied to the phosphate coating 120.

In the drawing S300, the wire rod 110 is drawn through a drawing apparatus 130 including the drawing die 131 capable of drawing the wire rod 110 and the pressure die 132 installed in front of the drawing die 131 and capable of applying pressure to the wire rod 110. In the drawing S300, lubrication performance may be improved by making a pressure die diameter (a) 1.05 times to 1.2 times a drawing die diameter (b), and thus increasing pressure to be applied to the phosphate coating 120.

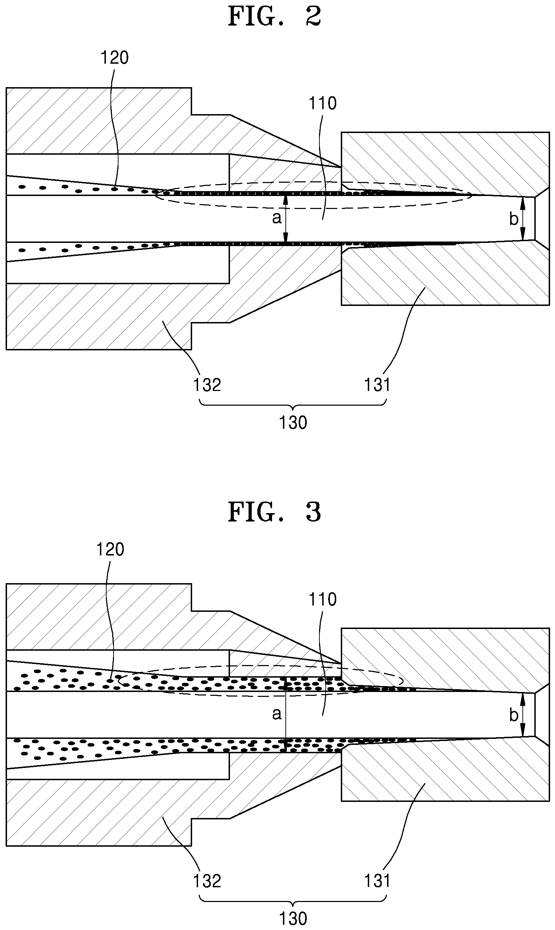

### (Referring to FIG. 2, the pressure die diameter (a) refers to length a, and the drawing die diameter (b) refers to length b.)

The pressure die 132 may apply pressure to the phosphate coating 120 applied onto the surface of the wire rod 110, and the phosphate coating 120 is liquefied by the pressure applied by the pressure die 132, thus serving as a lubricant.

Referring to FIGS. 2 and 3, it is desirable that the pressure die diameter (a) be 1.2 times the drawing die diameter (b) or less. When the pressure die diameter (a) is big as shown in FIG. 3, the pressure applied by the pressure die 132 becomes small, and accordingly, the ratio of the liquefaction of the phosphate coating 120 is small, leading to a difficulty in improving lubrication performance. Thus, according to an embodiment of the present disclosure, the amount of lubricant flowing into the drawing die 131 may be increased by lowering the pressure die diameter (a) to 1.20 times the drawing die diameter (b), as shown in FIG. 2.

As the amount of the lubricant flowing into the drawing die 131 is increased, the inside and outside of the wire rod 110 may be evenly drawn. In the case of the existing high C steel wire rod containing a high C content, friction between the wire rod and the die may occur due to the degradation of the lubrication performance, and thus the inside and outside of the wire rod may be unevenly drawn, leading to a lowering of the characteristic values such as torsional rotation, bending, and kink.

However, when lubrication performance is improved by lowering the pressure die diameter (a) to 1.20 times the drawing die diameter (b), the inside and outside of the wire rod 110 may be evenly drawn, and accordingly a lowering of the characteristic values such as torsional rotation, bending, and kink may be prevented during the drawing process. Thus, it is desirable that the pressure die diameter (a) be 1.2 times the drawing die diameter (b) or less.

Still, it is desirable that the pressure die diameter (a) be 1.05 times the drawing die diameter (b) or greater. When the phosphate coating 120 applied onto the surface of the wire rod 110 serves as a lubricant, large particles exist in the lubricant. If the pressure die diameter (a) is less than 1.05 times the drawing die diameter (b), lubrication performance may rather be degraded since the pressure die may be blocked by the large particles in the lubricant. In addition, if the pressure die diameter (a) is too small, friction may occur between the wire rod 110 and the pressure die 132, which may rather degrade the lubrication performance. Thus, it is desirable that the pressure die diameter (a) be 1.05 times the drawing die diameter (b) or greater.

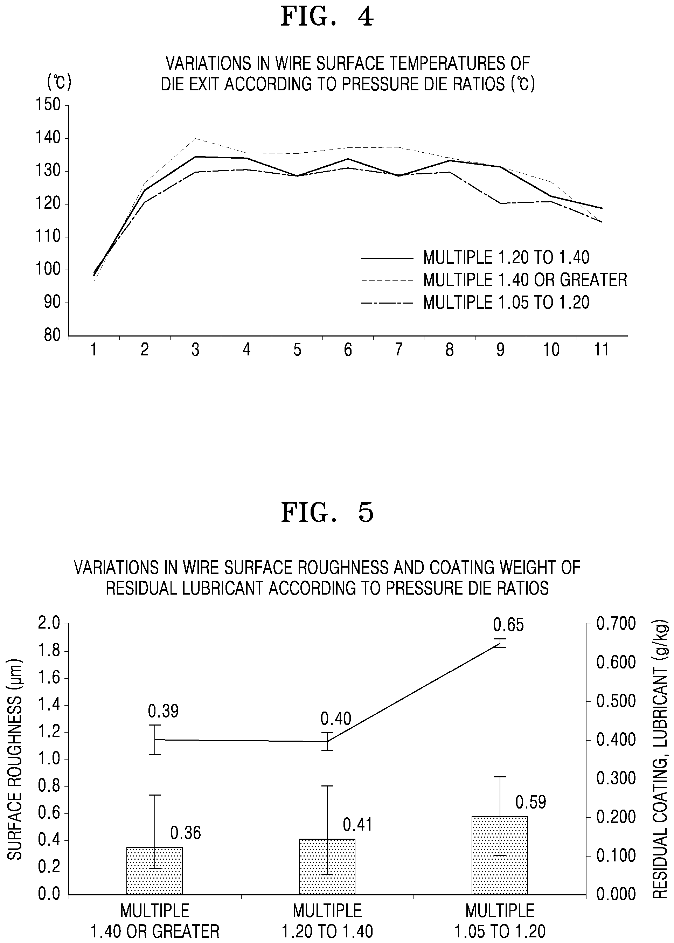

The reason why the pressure die diameter (a) needs to be 1.05 times to 1.2 times the drawing die diameter (b) will be described in greater detail, with reference to FIGS. 4 and 5 as follows. FIG. 4 shows temperature variations in wire surface of a dice exit, according to the ratios of the pressure die diameter (a), and FIG. 5 shows variations in wire surface roughness and coating amount of residual lubricant, according to the ratios of the pressure die diameter (a).

Referring to FIG. 4, it may be identified that when the pressure die diameter (a) is 1.05 times to 1.2 times the drawing die diameter (b), the wire surface temperature is lower than when other ratios are applied. That indicates that when the pressure die diameter (a) is 1.05 times to 1.2 times the drawing die diameter (b), friction occurs less as the lubrication performance is increased, and accordingly, the wire surface temperature becomes low.

Referring to FIG. 5, it may be identified that when the pressure die diameter (a) is 1.05 times to 1.2 times the drawing die diameter (b), the surface roughness increases, and the amount of residual coating lubricant increases. The fact that when the pressure die diameter (a) is 1.05 times to 1.2 times the drawing die diameter (b), the amount of residual coating lubricant increases indicates that the lubrication performance has been improved. (In addition, since when the pressure die diameter (a) is 1.05 times to 1.2 times the drawing die diameter (b), the surface roughness may increase, the strength of adhesion to rubber may increase.)

The wire rod 110 after the drawing S300 may be drawn to a wire diameter of 0.8 mm to 3.0 mm, and the high-strength bead wire manufactured by the above-described manufacturing method may have a strength of 240 kgf/mm² or greater and an elongation of 6 % of greater. (In detail, the high-strength bead wire may have a strength of 240 kgf/mm² to 260 kgf/mm² and an elongation of 6 % to 8 %.)

Depending on the wire diameter of the wire rod 110 that has undergone the drawing S300, the drawing S300 may include a primary drawing or a secondary drawing. In detail, if the wire diameter of the wire rod 110 after the drawing S300 is 1.3 mm or greater, the drawing S300 includes the primary drawing in which the drawing is performed to the target wire diameter right after the coating for drawing lubrication is applied onto the surface of the wire rod 110.

In contrast, if the wire diameter of the wire rod 110 after the drawing S300 is less than 1.3 mm, the drawing S300 may include the primary drawing, a patenting process, and the secondary drawing, or may include two separate operations.

In detail, the drawing S300 undergoes the patenting process to recover the tissue of the steel after the primary drawing. The patenting process is performed as follows. Temperature of the wire rod 110 is increased up to 850**°C** to 940**°C** by heating the wire rod 110 using a gas or electric heating furnace to transform the entire tissue of the wire rod into an austenite tissue. Following this, the wire rod 110 passes through a solder bath for uniform cooling to about 590**°C** and overall a uniform pearlite tissue is generated in the wire rod 110. Cleaning and recoating are performed using a middle line where the uniform pearlite tissue has been generated, and then the process is performed up to the final target wire diameter through the secondary drawing. Here, the amount of the drawing is determined based on the composition of the wire rod 110 and the expected tensile strength of the wire drawn to the target wire diameter.

The wire rod 110 drawn to the target wire diameter shows high strength due to the hardening process, but shows low elongation at break, merely 1 % to 3 %. Thus, the wire rod 110 needs an additional process to recover the elongation. In order to recover the elongation, annealing heat treatment may be applied to the drawn wire rod 110 at a temperature equal to or less than the transformation point, between 400**°C** and 500**°C** Through such a heat treatment, the elongation of the drawn wire rod 110 may be increased from 1 % to 3 % up to the target 6 % to 7 %.

The above-described method of manufacturing the high-strength bead wire includes the wire rod preparation S100, the coating application S200, and the drawing S300. Still, other processes may be also included in the method. For example, preparatory processes for drawing the wire rod such as pickling-cleaning-coating-cleaning-drying may be included. In addition, after the drawing S300, the surface of the wire rod may be plated with bronze made of an alloy of copper and tin by a chemical plating or electroplating method to ensure anticorrosion and increase the strength of adhesion to tire rubber, and a resin coating may be further applied onto the surface of the wire rod to increase anticorrosion, thus resistance to corrosion may be increased.

Apart from the wire rod preparation S100, the coating application S200, and the drawing S300, a manufacturing process required for drawing the existing wire rod may be included. Since such a manufacturing process is a well-known technique, a detailed description will be omitted herein.

The high-strength bead wire is manufactured by the above-described method of manufacturing a high-strength bead wire. The high-strength bead wire manufactured by the above-described method of manufacturing a high-strength bead wire may have a strength of 240 kgf/mm² or greater and an elongation 6% or greater. Such a high-strength bead wire has a high strength-to-weight ratio when applied to automobile tires, thus making it possible to reduce the weight of and increase fuel efficiency of the automobile, and endurance against tire pressure and resistance to external shocks are increased thanks to the high tensile strength, thus increasing stability of the automobile tires. (Such a high-strength bead wire may have a strength of 240 kgf/mm² to 260 kgf/mm² and an elongation of 6 % to 8 %.)

The high-strength bead wire manufactured by the above-described method of manufacturing a high-strength bead wire includes the wire rod 110 containing 0.86 % to 1.02 % by weight of C and 5 g/m² to 10 g/m² of the phosphate coating 120 to be applied onto the surface of the wire rod 110, wherein the wire rod 110 is drawn by the drawing apparatus 130 that includes the drawing die 131 capable of drawing the wire rod 110, and the pressure die 132 installed in front of the drawing die 131 and capable of applying pressure to the wire rod 110, and thus the high-strength bead wire is manufactured.

(Here, the pressure die diameter (a) may be 1.05 times to 1.20 times the drawing die diameter (b). Since the critical meaning of the pressure die diameter (a) has been described above, a description thereof will be omitted herein. In addition, since the reason for applying 5 g/m² to 10 g/m² of the phosphate coating 120 onto the surface of the wire rod 110 has been described above, a description thereof will be omitted herein.)

The wire diameter of the wire rod 110 may be 5.0 mm to 9.0 mm, and the wire rod 110 may be formed with a wire diameter of 0.8 mm to 3.0 mm after the drawing process. The wire rod 110 may include silicon (Si), manganese (Mn), and chromium (Cr), wherein the Si may be 0.40% to 0.58% by weight, the Mn may be 0.25% to 0.40% by weight, and the Cr may be 0.15% to 0.25% by weight. Alternatively, the wire rod 110 may include phosphorus (P), sulfur (S), copper (Cu), and aluminum (Al).

Components included in the wire rod 110 play the following roles.

Carbon (C) is an element essential for increasing strength and elongation of the wire, and when high carbon steel containing a high C content is used, the high-strength bead wire may be manufactured due to a high melting effect. On the other hand, when the C content is low, it is impossible to manufacture the target high-strength bead wire even if the amount of the drawing is increased. Si is an element effective for reinforcing the steel without lowering the elongation of the steel. In addition, Si is an element vital for controlling the surface area of a ferrite phase in the steel, and in order to obtain the high-strength bead wire, 0.30 % by weight of Si or greater is required.

Mn is an element stabilizing an austenite phase, and Mn is an element vital for preventing the formation of the ferrite during continuous annealing cooling. In addition, Mn is an element effective for increasing the strength and hardening process of the wire rod. P is an element effective for reinforcing the steel and is added according to strength levels, and in order to have a reinforcing effect, 0.005 % by weight of P or greater is desirable. However, when the amount of P exceeds 0.025 % by weight, the weldability degrades.

S may be a factor lowering the characteristic values such as torsional rotation and bending by generating non-metallic inclusions such as MnS, and the like, and thus it is desirable to lower the content of S as much as possible when manufacturing the high-strength bead wire. Cr is added to increase the strength and freshness of the wire.

Embodiments of the present disclosure will be more fully understood from the following detailed description hereinafter. It is to be understood that embodiments are given by way of example and not of limitation of the present disclosure.

### [Embodiment]

Component contents of the wire rod for manufacturing the high-strength bead wire are expressed in weight percent as follows: C: 0.90 % to 0.94 % by weight, Si: 0.40 % to 0.58 % by weight, Mn: 0.25 % to 0.40 % by weight, P: ≤ 0.020 % by weight, S: ≤ 0.020 % by weight, Cr: 0.15 % to 0.25 % by weight, Cu: ≤ 0.040 % by weight, and Al: ≤ 0.007 % by weight.

The wire rod of 5.5 mm diameter was used. The bead wire of 1.60 mm diameter was manufactured using the wire rod, and the manufacturing process is as follows. Scales and impurities remaining on the surface of the wire rod are removed and cleaned by physical and chemical methods, and a phosphate coating is applied onto the surface of the wire rod for lubrication.

The physical descaling process is a process in which the wire rod is bent while passing through a descaling roller so that the scales are peeled off, and the chemical descaling process is a process in which the wire surface is cleaned by chemically removing the remaining scales through hydrochloric acid pickling or electrolytic pickling.

Following this, 5 g/m2 to10 g/m2 of phosphate coating is applied onto the surface of the wire rod during the drawing process to increase the lubrication. Then, the coated wire rod is drawn up to 1.60 mm diameter. A pressure die is installed in front of a drawing die during the drawing process to increase lubricity, and the diameter of the pressure die needs to be 1.1 times the diameter of the drawing die or less.

Concerning the pressure die, the smaller the wire diameter ratio, the higher the pressure between the pressure die and the wire, and thus the lubricity is increased as more lubricant is flowing therein. On the other hand, if the wire diameter is too small, the pressure die may be blocked by large particles in the lubricant, rather reducing the lubricity. Thus, in embodiments of the present disclosure, the pressure die ratio has been set to 1.05 times to 1.2 times using lubricant with small-sized particles so that more lubricant may be flowing between the pressure die and the wire, and thus uniform processing may be carried out between the inside and outside of the wire during the drawing.

The wire surface of 1.60 mm drawn wire undergoes a pickling and is cleaned, and then deposited in a bath at a temperature between 400°C to 500°C to recover the elongation from 1 % to 3 % up to 6 % to 7 %. Following this, in order to increase anticorrosion and the strength of adhesion to the rubber, the wire passes through a bronze plating bath in a chemical plating manner so that the wire surface is plated with the bronze plating. In addition, a resin coating has been applied for anticorrosion to prevent damage caused by moisture even during a long-term storage.

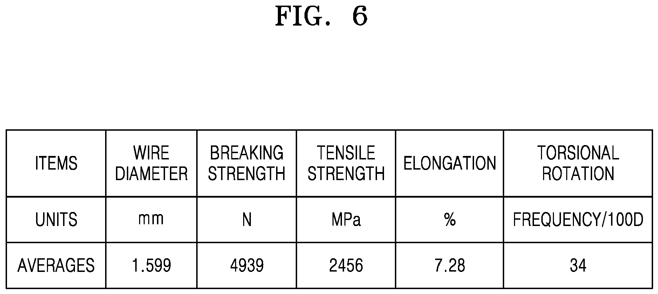

Physical properties of the high-strength bead wire manufactured through the above-described process are shown in FIG. 6. In detail, the high-strength bead wire manufactured through the above-described process may be capable of high tensile strength of 2,456 Mpa and high elongation of 7.28 %.

The high-strength bead wire and the method of manufacturing the same according to one or more embodiments of the present disclosure described above have the following merits.

Tensile strength of the existing bead wire stands at 180 kgf/mm² to 220 kgf/mm². In order to increase the strength of the bead wire, the C content needs to be increased. However, if the C content is increased, the characteristic values such as torsional rotation, bending, and kink may be lowered during the drawing. In detail, when the high C steel wire rod containing a high C content is drawn, whereas the outside of the wire rod is less processed, the inside of the wire rod is more processed in comparison.

When the high C steel wire rod containing a high C content is drawn, internal cracks or blowholes may be generated due to the difference in processing between the inside and outside of the wire rod, which causes non-uniform processing, and as a result, the characteristic values such as torsional rotation, bending, and kink are lowered.

However, according to one or more embodiments of the present disclosure, even when the wire rod is drawn after the lubrication performance is increased during the drawing process, the characteristic values such as torsional rotation, bending, and kink are not lowered. In detail, the lubrication performance is increased by increasing the amount of the phosphate coating 120 to be applied onto the surface of the wire rod 110 to 5 g/m² to 10 g/m² and at the same time, making the pressure die diameter (a) 1.05 times to 1.20 times the drawing die (b) so that the pressure to be applied to the phosphate coating 120 may be increased.

As a result, the high-strength bead wire having a strength of 240 kgf/mm² or greater and an elongation of 6 % or greater may be manufactured. (In other words, the high-strength bead wire may have a strength of 240 kgf/mm² to 260 kgf/mm² and an elongation of 6 % to 8 %.) The high-strength bead wire has a high strength-to-weight ratio when applied to automobile tires, thus making it possible to reduce the weight of and increase fuel efficiency of the automobile, and increases endurance against tire pressure and resistance to external shocks thanks to the high tensile strength, thus increasing stability of the automobile tires.

While example embodiments of the present disclosure have been illustrated and described in detail with reference to the accompanying drawings, it will be clear that embodiments of the present disclosure are not limited thereto. Numerous modifications, changes, variations, substitutions, and equivalents will be apparent to those skilled in the art. Thus, it is intended that the specification and examples be considered as exemplary only, with the true scope and spirit of the invention being indicated by the appended claims.

## Claims

1. A method of manufacturing a high-strength bead wire used as a reinforcing material for an automobile tire, the method comprising:
preparing a wire rod containing 0.86 % to 1.02 % by weight of carbon;
applying 5 g/m² to 10 g/m² of phosphate coating onto a surface of the wire rod; and
drawing the wire rod onto which the phosphate coating is applied,
wherein, in the drawing, the wire rod is drawn through
a drawing apparatus including a drawing die capable of drawing the wire rod and a pressure die installed in front of the drawing die and capable of applying pressure to the wire rod, and
the diameter of the pressure die is 1.05 times to 1.2 times the diameter of the drawing die.

2. The method of claim 1, wherein
the wire rod includes silicon, manganese, and chromium, and
the silicon is 0.40 % to 0.58 % by weight, the manganese is 0.25 % to 0.40 % by weight, and the chromium is 0.15 % to 0.25 % by weight.

3. The method of claim 1, wherein
the wire rod that has undergone the drawing is formed with a wire diameter of 0.8 mm to 3.0 mm, and has a strength of 240 kgf/mm² or greater and an elongation of 6 % or greater.

4. The method of claim 3,
wherein when the wire diameter of the wire rod after the drawing is greater than 1.3 mm,
the drawing includes a primary drawing, and
when the wire diameter of the wire rod after the drawing is less than 1.3 mm,
the drawing includes
the primary drawing, a patenting process, and a secondary drawing.

5. A high-strength bead wire used as a reinforcing material for an automobile tire, the high-strength bead wire comprising:
a wire rod containing 0.86 % to 1.02 % by weight of carbon,
wherein 5 g/m² to 10 g/m² of phosphate coating is applied onto the surface of the wire rod, and
the wire rod is drawn by
a drawing apparatus including a drawing die capable of drawing the wire rod and a pressure die installed in front of the drawing die and capable of applying pressure to the wire rod, and
the diameter of the pressure die is 1.05 times to 1.20 times the diameter of the drawing die.

6. The high-strength bead wire of claim 5, wherein
the wire rod includes silicon, manganese, and chromium, and
the silicon is 0.40 % to 0.58 % by weight, the manganese is 0.25 % to 0.40 % by weight, and the chromium is 0.15 % to 0.25 % by weight.

7. The high-strength bead wire of claim 5, wherein
the wire rod drawn through the drawing apparatus is formed with a wire diameter of 0.8mm to 3.0 mm, and has a strength of 240 kgf/mm² or greater and an elongation of 6 % or greater.
